# EUROPEAN PATENT APPLICATION

(11) **EP 3 480 437 A1**
(43) Date of publication of application: **08.05.2019**
(21) Application number: 18203646.7
(22) Date of filing: 31.10.2018
(51) Int. Cl.: F01N 3/021

(54) **EXHAUST GAS TREATMENT APPARATUS**

(30) Priority: 02.11.2017 JP 2017212916
(71) Applicant: Kabushiki Kaisha Toyota Jidoshokki, Kariya-shi, Aichi 448-8671 (JP)
(72) Inventor: TANIZAWA, Seigaku, Kariya-shi,, Aichi 448-8671 (JP)
(74) Representative: TBK

(57) **Abstract**

An exhaust gas treatment apparatus (10) includes an exhaust gas passage (13), a diesel particulate filter (14) disposed in the exhaust gas passage (13) so as to purify the exhaust gas, an exhaust gas temperature sensor (16) disposed upstream of the diesel particulate filter (14) and measuring a temperature of the exhaust gas flowing into the diesel particulate filter (14), a lead wire (17) disposed on an outer peripheral surface (14a) of the diesel particulate filter (14), and a controller (15) measuring the electrical resistance of the lead wire (17) and determining whether or not there is an abnormality in the diesel particulate filter (14). The controller (15) determines whether or not there is an abnormality in the diesel particulate filter (14) based on the temperature of the exhaust gas measured by the exhaust gas temperature sensor (16) and the measured electrical resistance.

## Description

### BACKGROUND OF THE INVENTION

The present disclosure relates to an exhaust gas treatment apparatus.

A vehicle equipped with a diesel engine such as an industrial vehicle and a passenger vehicle has an exhaust gas treatment apparatus for removing particulate matter (PM) from exhaust gas. The exhaust gas treatment apparatus includes a diesel particulate filter (DPF) that collects PM in the exhaust gas. The PM collected by the DPF is accumulated in the DPF. Because an increase of the accumulation of PM obstructs the flow of exhaust gas thereby to decrease the performance of the engine, regeneration of the DPF is performed regularly. During the regeneration, fuel is added to the exhaust gas to increase the temperature of exhaust gas thereby to burn and remove the PM accumulated in the DPF. Accordingly, the flow of exhaust gas is restored. Because fuel is added to the exhaust gas during the regeneration of the DPF, the fuel efficiency is decreased if the regeneration of the DPF is performed frequently. In some case, an unauthorized altercation is made to the exhaust gas treatment apparatus, i.e. the removal of the DPF, so as to avoid the deterioration of the fuel efficiency caused by the regeneration control of the DPF and the reduction of the engine performance caused by an increase of the accumulation of the PM. In order to prevent such removal of the DPF, it may be contemplated to provide a detection means that detects the presence or the absence of the DPF in the exhaust gas treatment apparatus.

Japanese Patent Application Publication No. 2007-138837 discloses an anti-theft device for an exhaust gas treatment apparatus that detects the presence or the absence of a DPF. The anti-theft device includes a disconnected wire detection system and an alarm device. The disconnected wire detection system detects a disconnection of an electric wire of a temperature sensor that is connected to a casing having therein a catalyst. When the disconnection of the electric wire, which may be caused by removal of the casing, is detected, the alarm device generates an alert such as buzzing.

In a case in which only catalyst is removed from the casing mounted on the vehicle, however, there is a fear that the anti-theft device of the exhaust gas treatment apparatus may not detect the abnormality in the exhaust gas treatment apparatus. Therefore, there has been a demand for an exhaust gas treatment apparatus that detects the presence or the absence of the DPF more reliably.

The present invention is directed to providing an exhaust treatment apparatus that reliably determines the occurrence of any abnormality in a diesel particulate filter caused by removal of a DPF.

### SUMMARY

In accordance with an aspect of the present disclosure, there is provided an exhaust gas treatment apparatus including an exhaust gas passage through which an exhaust gas emitted from an internal combustion engine flows, a diesel particulate filter that is disposed in the exhaust gas passage so as to purify the exhaust gas, an exhaust gas temperature sensor that is disposed upstream of the diesel particulate filter in the exhaust gas passage and measures a temperature of the exhaust gas flowing into the diesel particulate filter, a lead wire that is disposed on an outer peripheral surface of the diesel particulate filter, wherein an electrical resistance of the lead wire changes with temperature, and a controller that measures the electrical resistance of the lead wire and determines whether or not there is an abnormality in the diesel particulate filter. The controller determines whether or not there is an abnormality in the diesel particulate filter based on the temperature of the exhaust gas measured by the exhaust gas temperature sensor and the measured electrical resistance.

Other aspects and advantages of the disclosure will become apparent from the following description, taken in conjunction with the accompanying drawings, illustrating by way of example the principles of the invention.

### BRIEF DESCRIPTION OF THE DRAWINGS

The invention together with objects and advantages thereof may best be understood by reference to the following description of the presently preferred embodiments together with the accompanying drawings in which:
FIG. 1 is a schematic view of an exhaust gas treatment apparatus according to a first embodiment of the present disclosure;
FIG. 2 is a perspective view of a DPF of the exhaust gas treatment apparatus of FIG. 1;
FIG. 3 is a chart of a control flow executed by a controller of the exhaust gas treatment apparatus of FIG. 1;
FIG. 4 is a chart of a control flow executed by a controller according to a second embodiment of the present disclosure;
FIG. 5 is a chart showing the electrical resistance of a lead wire variable with time according to the second embodiment;
FIG. 6 is a perspective view of the DPF, showing an arrangement of the lead wire according to another example of the present disclosure; and
FIG. 7 is a perspective view of the DPF, showing another arrangement of the lead wire according to yet another example of the present disclosure.

### DETAILED DESCRIPTION OF THE EMBODIMENTS

### (First embodiment)

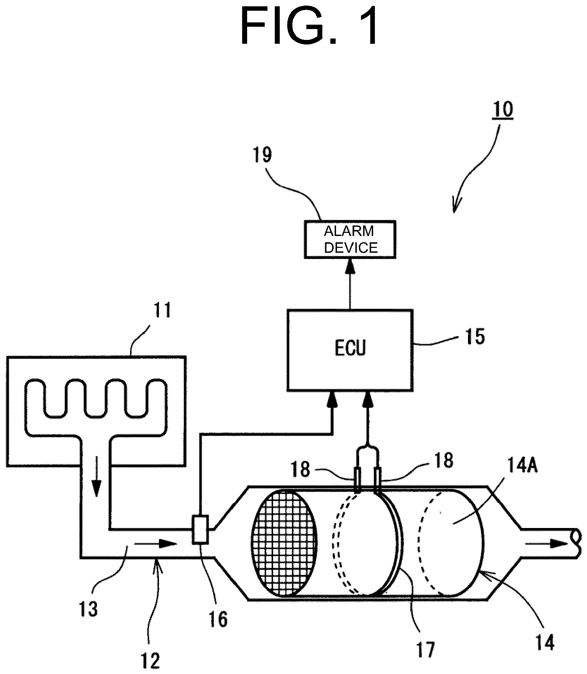

The following will describe an exhaust gas treatment apparatus according to a first embodiment of the present disclosure with reference to FIGS. 1 through 3. The description will deal with an example of the exhaust gas treatment apparatus provided for purifying exhaust gas emitted from a diesel engine mounted on a vehicle.

FIG. 1 depicts an exhaust gas treatment apparatus 10 mounted on a vehicle (not shown) so as to purify exhaust gas emitted from a diesel engine (hereinafter simply referred to as the engine 11). The exhaust gas treatment apparatus 10 includes an diesel particulate filter (DPF) 14 that is disposed in an exhaust gas passage 13 formed by an exhaust gas pipe 12, an exhaust gas temperature sensor 16 that measures the temperature of exhaust gas (exhaust gas temperature) immediately before flowing into the DPF 14, and an ECU 15 that serves as a controller and is configured to control the internal combustion engine.

The DPF 14 is made of an insulating material such as a ceramic and has a cylindrical honeycomb structure. The DPF 14 has an outer peripheral surface 14a that is surrounded by the exhaust gas pipe 12. A space, which is formed between the outer peripheral surface 14a of the DPF 14 and the exhaust gas pipe 12, is filled with grass wool serving as a heat insulant. Exhaust gas emitted from the engine 11 flows through the exhaust gas passage 13 and the DPF 14 in the exhaust gas passage 13 and discharged out to the atmosphere through an exhaust port (not shown). The DPF 14 purifies exhaust gas by collecting PM from the exhaust gas passing through the DPF 14. When an accumulation of PM in the DPF 14 is increased, regeneration of the DPF is executed. During regeneration of the DPF, fuel is added to the exhaust gas to increase the temperature of exhaust gas so that PM accumulated in the DPF is burned and removed.

An exhaust gas temperature sensor 16 is disposed upstream of the DPF 14 in the exhaust gas passage 13, or at a position between the engine 11 and DPF 14. In the present embodiment, the exhaust gas temperature sensor 16 is disposed adjacently to the inlet of the DPF 14 so as to measure the temperature of exhaust gas immediately before flowing into the DPF 14. The exhaust gas temperature sensor 16 is electrically connected to the ECU 15 and generates a signal that is indicative of the temperature of exhaust gas measured by the exhaust gas temperature sensor 16 and sends such signal to the ECU 15.

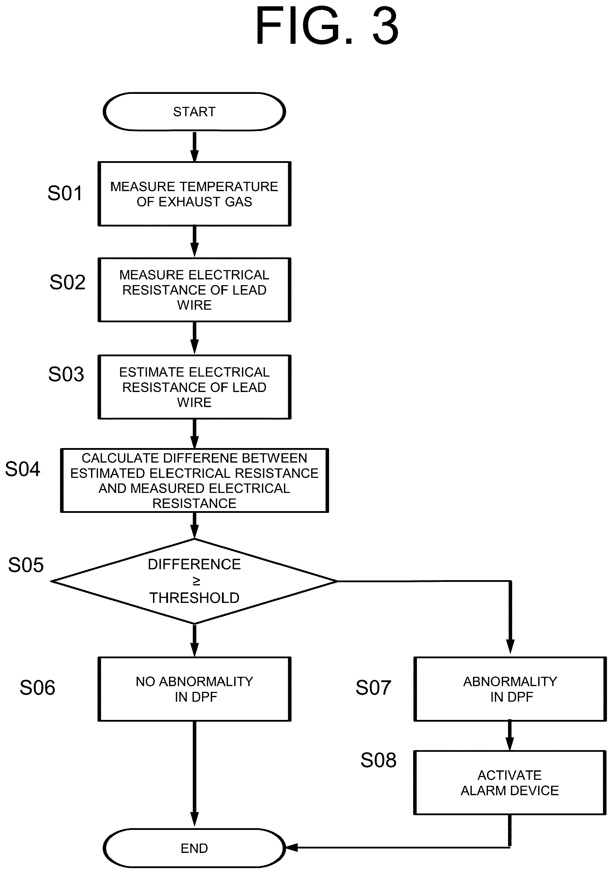

The exhaust gas treatment apparatus 10 includes the ECU 15 serving as the controller. The ECU 15 is configured to estimates the temperature of the DPF 14 based on the signal from the exhaust gas temperature sensor 16, as well as to control the engine 11. The ECU 15 stores therein a program for execution of a control flow shown in FIG. 3.

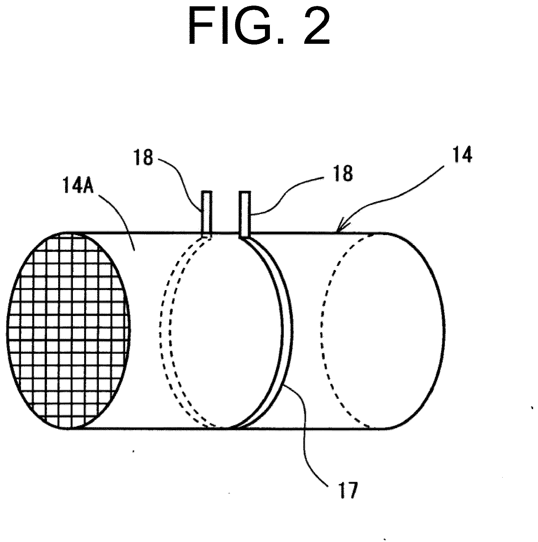

As shown in FIGS. 1 and 2, a lead wire 17 is disposed on the outer peripheral surface 14a of the DPF 14 in the present embodiment. Specifically, the lead wire 17 is wound on the outer peripheral surface 14a extending in the circumferential direction of the DPF 14. In other words, the lead wire 17 is disposed extending in the circumferential direction of the DPF 14 on the outer peripheral surface 14a thereof. The lead wire 17 has a characteristic that changes its electrical resistance with the temperature and is made of a material of temperature dependence of resistivity. The lead wire 17 is preferably made of a material that changes its electrical resistance greatly with temperature. The lead wire 17 of the present embodiment is made of a metal material that increases its electrical resistance with an increase of the temperature. The lead wire 17 has at the opposite ends thereof a pair of terminals 18 projecting out into the exhaust gas passage 13. The paired terminals 18 are electrically connected to the ECU 15. The ECU 15 reads the electrical resistance of the lead wire 17 by electrifying the lead wire17.

The temperature of the DPF 14 is variable with the temperature of exhaust gas. Since the lead wire 17 is disposed on the outer peripheral surface 14a of the DPF 14, the change in the temperature of the DPF 14 is transferred to the lead wire 17 thereby to change the temperature of the lead wire 17. Thus, the electrical resistance of the lead wire 17 is changed.

As shown in FIG. 1, the exhaust gas treatment apparatus 10 includes an alarm device 19. In the present embodiment, the alarm device 19 is provided by an engine check lamp (malfunction indicator lamp) disposed in an instrument panel at a driver seat (not shown). The alarm device 19 is connected to the ECU 15. When there is an abnormality in the DPF 14, the ECU 15 activates the alarm device 19.

The following will describe the operation of the ECU 15 in determining whether or not there is an abnormality in the DPF 14. Referring to FIG. 3, the ECU 15 determines the temperature of exhaust gas flowing into the DPF 14 based on a signal from the exhaust gas temperature sensor 16 (See Step S01). The ECU 15 measures the electrical resistance of the lead wire 17 by electrifying the lead wire 17, such electrical resistance hereinafter referred to as the measured electrical resistance (See Step S02). Subsequently, the ECU 15 estimates the electrical resistance of the lead wire 17 based on the temperature of exhaust gas, such electrical resistance hereinafter being referred to as the estimated electrical resistance (See Step S03)..

Subsequently, the ECU 15 calculates the difference between the estimated electrical resistance and the measured electrical resistance (See Step S04). The ECU 15 then determines whether or not the difference between the estimated electrical resistance and the measured electrical resistance is equal to or less than a threshold value (See Step S05). The threshold value is preset in the program executing the control flow. If the ECU 15 determines that the difference between the estimated electrical resistance and the measured electrical resistance is equal to or less than the threshold value, the ECU 15 determines that there is no abnormality of DPF 14 (See Step S06). In other words, the ECU 15 determines that the DPF 14 is not removed from the exhaust gas treatment apparatus 10. After the ECU 15 determines that the DPF 14 is not removed from the exhaust gas treatment apparatus 10, the program ends the control flow.

If the ECU 15 determines that the difference between the estimated electrical resistance and the measured electrical resistance is greater than the threshold value, the ECU 15 determines that there is an abnormality in the DPF 14 (See Step S07). In other words, the ECU 15 determines that the DPF 14 is removed from the exhaust gas treatment apparatus 10.

In a case in which only the DPF 14 is removed from the exhaust gas treatment apparatus 10, it may be thought that the lead wire 17 remains in the exhaust gas passage 13 or the terminals 18 are connected through a different type of a lead wire. If the DPF 14 is removed with the lead wire 17 remaining in the exhaust gas passage 13, the electric resistance of the lead wire 17 measures low because no heat is transmitted to the lead wire 17 from the DPF 14 and the temperature of the lead wire 17 is not increased so much relative to the exhaust gas temperature, with the result that the difference between the estimated electrical resistance and the measured electrical resistance exceeds the threshold value to a large extent. If the DPF 14 is removed with the terminals 18 connected through a different type of lead wire, the temperature of the different type of the lead wire increases differently from that of the lead wire 17 of the present embodiment. As a result, the measured electrical resistance of the different type of the lead wire is considerably different from the estimated electric resistance, which is estimated from the temperature of exhaust gas measured by the exhaust gas temperature sensor 16, thus the difference between the estimated electrical resistance and the measured electrical resistance exceeding the threshold value greatly. If the lead wire 17 is cut, the measured electric resistance becomes infinite and, therefore, the difference between the estimated electrical resistance and the measured electrical resistance exceeds the threshold value considerably.

When the ECU 15 determines that there is an abnormality in the DPF 14, the ECU 15 activates the alarm device 19 (See Step S08). The malfunction indicator lamp, which serves as the alarm device 19, is illuminated to indicate that there is an abnormality in the DPF 14, which allows the driver of the vehicle to recognize thee abnormality in the DPF 14. After activating the alarm device 19, the ECU 15 ends the control flow.

The exhaust gas treatment apparatus 10 of the first embodiment offers the following effects.
(1) The ECU 15 determines the occurrence of abnormality in the DPF 14 by determining whether the difference between the estimated electrical resistance that is estimated from the temperature of exhaust gas measured by the exhaust gas temperature sensor 16 and the measured electrical resistance that is measured by the ECU 15 is equal to or less than the threshold value. Therefore, in the case that only the DPF 14 is removed from the exhaust gas treatment apparatus 10 and the lead wire 17 remains in the exhaust gas passage 13, the ECU 15 determines the occurrence of an abnormality in the DPF 14 based on the temperature of the lead wire 17 being not increased relative to the exhaust gas temperature and the difference between the estimated electrical resistance and the measured electrical resistance being increased. In the case that the terminals 18 are connected through a different type of lead wires, the temperature of such lead wire is increased in a different manner from that of the lead wire 17 of the present embodiment. Thus, the measured electrical resistance of the different type of the lead wire is considerably different from the estimated electrical resistance estimated from the exhaust gas temperature measured by the exhaust gas temperature sensor 16. Based on this, the abnormality in the DPF 14 may be determined in the case that the terminals 18 are connected through a different type of the lead wire. Furthermore, in the case that the lead wire 17 is cut, the electrical resistance becomes infinite, so that the abnormality in the DPF 14 may be determined based on the difference between the estimated electrical resistance and the measured electrical resistance.
(2) The lead wire 17 is disposed on the outer peripheral surface 14a of the DPF 14, extending in the circumferential direction of the DPF 14. In such configuration, the electrical resistance of the lead wire 17 is easily changed with a change in the temperature of the DPF 14, so that an abnormality in the DPF 14 is reliably determined. In addition, the disposition of the lead wire 17 on the outer peripheral surface 14a of the DPF 14 makes it difficult to the remove the DPF 14.
(3) As a means for measuring the temperature of the DPF 14, the lead wire 17 is used, which is made of an inexpensive metal wire having a characteristic that changes the electrical resistance with a change of the temperature. Thus the abnormality detection means for the DPF 14 may be formed inexpensively.

### (Second embodiment)

The following will describe a second embodiment of the present disclosure. The exhaust gas treatment apparatus 10 of the second embodiment differs from the first embodiment in that the determination of abnormality in the DPF 14 is made based on the manner in which plural measurement of the electrical resistance of the lead wire 17 is varied (the variation trend in the electric resistance) and the manner in which plural measurements of the temperature of exhaust gas is varied (the variation trend in the temperature of exhaust gas). The configuration of the exhaust gas treatment apparatus 10 of the second embodiment is generally the same with that of the first embodiment. Like reference numerals designate like parts and components and the description of such like parts and components will be not be reiterated.

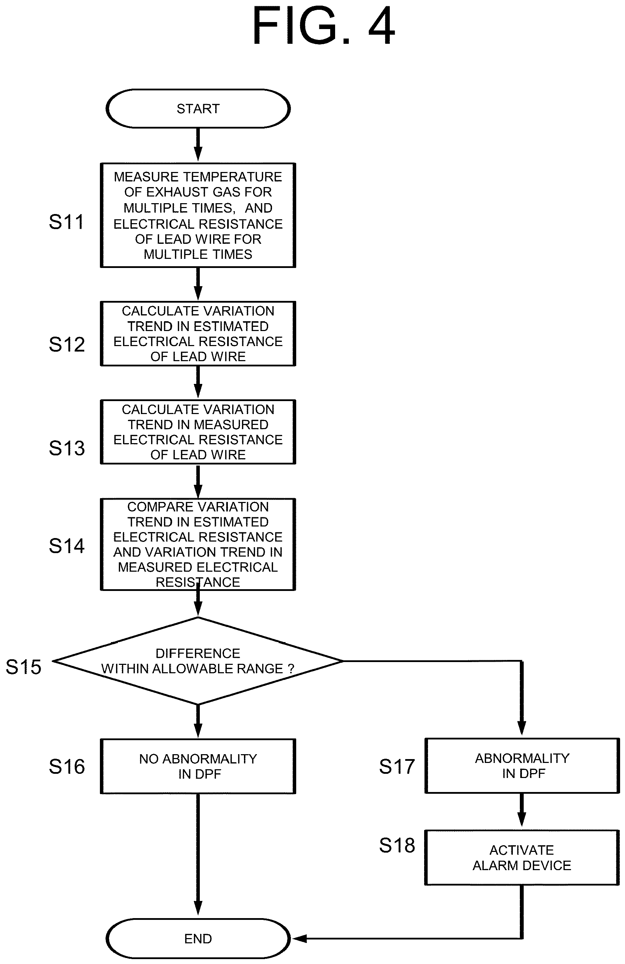

The following will describe the determination of the abnormality in the DPF 14 made by the ECU 15 according to the second embodiment with reference to FIG. 4. FIG. 4 shows a control flow executed by a program stored in the ECU 15 according to the second embodiment. The ECU 15 measures the temperature of exhaust gas for multiple times based on the signals from the exhaust gas temperature sensor 16 and also the electrical resistance of the lead wire 17 for multiple times by electrifying the lead wire 17 for multiple times (See Step S11). Subsequently, the ECU 15 estimates the electrical resistance of the lead wire 17 based on the temperatures of exhaust gas and calculates the variation trend in the estimated electrical resistance (See Step S12). The ECU 15 calculates the variation trend in the measured electrical resistance (See Step S13). In the present embodiment, the ECU 15 calculates the rate of change in the electrical resistance as the variation trend in the electrical resistance. The rate of change in the electrical resistance corresponds to the rate of the electric resistance that is changed during a predetermined period of time.

Then, the ECU 15 compares the variation trend in the estimated electrical resistance and the variation trend in the measured electrical resistance (Step S14) and determines whether or not the difference between the variation trend in the estimated electrical resistance and the variation trend in the measured electrical resistance is within the allowable range (Step S15). The allowable range for the difference in the rate of change in the electric resistance between the estimated electrical resistance and the measured electrical resistance is set in the program executing the control flow stored in the ECU 15 for the determination of whether or not the difference between the variation trend in the estimated values of electrical resistance and the variation trend in the measured values of electrical resistance is within a normal range. In other words, a threshold value is set for the rate of change in the electrical resistance in the program of the control flow stored in the ECU 15. Thus, the ECU 15 determines whether or not the rate of change in the electrical resistance exceeds the threshold value.

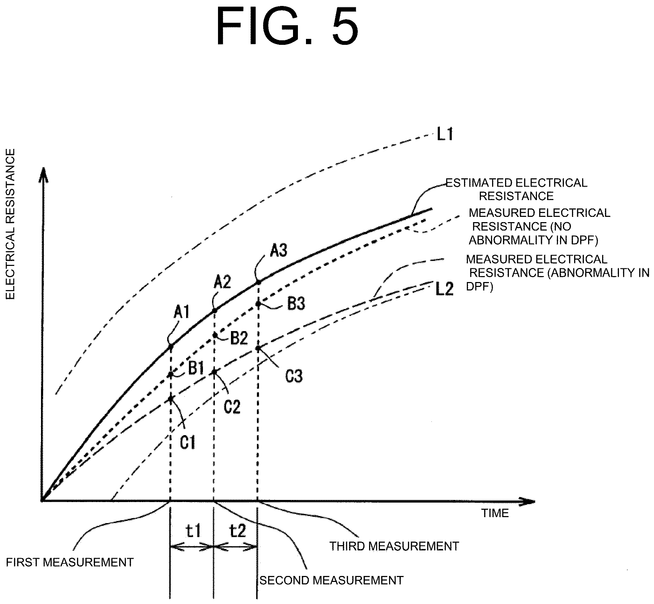

Referring to FIG. 5, the threshold for the measured electrical resistance in determining whether or not the difference between the estimated electrical resistance and the measured electrical resistance is within the normal range according to the first embodiment are indicated by two boundary lines L1 and L2. There may occur a case in which the measured electrical resistance falls into the range where the DPF 14 is considered normal even when there is an abnormality in the DPF 14. In such a case, the determination of the abnormality in the DPF 14 cannot be accomplished by using the threshold value according to the first embodiment. As shown in FIG. 5, the estimated electrical resistance for the first, second and third measurements of the temperature of exhaust gas are plotted at A1, A2, A3 in the chart for the second embodiment. The periods of time t1, t2 correspond to the time interval between the first and the second measurements and the time interval between the second and the third measurements, respectively, which are set as the predetermined periods of time in calculating the rates of the changes in the electrical resistance. The time intervals t1, t2 should desirably be the same.

When the DPF 14 is not removed from the exhaust gas treatment apparatus 10 and, therefore, there is no abnormality in the DPF 14, the temperature of the lead wire 17 tends to change easily by heat transfer from the DPF 14. Thus, a curve for the measured electrical resistance including the points B1, B2, B3 for the first, the second, and the third measurements may be drawn, as shown in FIG. 5. The variation trend in the measured electrical resistance resembles to the variation trend in the estimated electrical resistance, which has been calculated from the temperature of exhaust gas. The rate of change in the estimated electrical resistance and the rate of change in the measured electrical resistance in the predetermined period of time t1 are similar to each other, and the difference in the rate of change in the electric resistance between the estimated electrical resistance and the measured electrical resistance is equal to or less than the threshold value and falls within the allowable range for the rate of changes in the electrical resistance. When the difference in the rate of change in the electrical resistance is within the allowable range, the ECU 15 determines that there is no abnormality in the DPF 14.

If the DPF 14 is removed from the exhaust gas treatment apparatus 10, on the other hand, the temperature of the lead wire 17 changes modestly because of no heat transfer from the DPF 14 to the lead wire 17, with the result that the rate of change in the measured electrical resistance in the predetermined periods of time between the measurements becomes small, as shown in FIG. 5. Reference characters C1, C2, C3 in FIG. 5 show examples of the measured electrical resistance at the first, the second and the third measurements. The measured electrical resistance falls within the range where it is determined that there is no abnormality in the DPF 14, though the rate of change in the measured electrical resistance is smaller than that when there is no abnormality in the DPF 14. As a result, there occurs a difference between the rate of change in the estimated electrical resistance and the rate of change in the measured electrical resistance. The ECU 15 determines that there is an abnormality in the DPF 14 if the difference between the rate of change in the estimated electrical resistance and the rate of change in the measured values of electrical resistance exceeds the threshold value.

In the case that the difference between the variation trend in the estimated electrical resistance and the variation trend in the measured electrical resistance is within the allowable range, i.e., the difference in the rate of change in the electric resistance between the estimated electrical resistance and the measured electrical resistance not exceeding the threshold value, the ECU 15 determines that the DPF 14 is not removed from the exhaust gas treatment apparatus 10, thus the ECU 15 determining that there is no abnormality in the DPF 14 (See Step S16). The control flow of the program ends after the ECU 15 determines that there is no abnormality in the DPF 14.

In the case that the difference between the variation trend in the estimated electrical resistance and the variation trend in the measured electrical resistance is not within the allowable range, i.e., the difference in the rate of change in the electric resistance between the estimated electrical resistance and the measured electrical resistance exceeding the threshold value, the ECU 15 determines that the DPF 14 is removed from the exhaust gas treatment apparatus 10, thus the ECU 15 determining that there is an abnormality in the DPF 14 (See Step S17). In other words, when the difference in the rate of change in the electric resistance between the estimated electrical resistance and the measured electrical resistance exceeds the threshold value, the ECU 15 determines that the rate of change in the estimated electrical resistance and the rate of change in the measured resistance are inconsistent and hence determines that there is an abnormality in the DPF 14. If the ECU 15 determines that there is an abnormality in the DPF 14, the ECU 15 activates the alarm device 19 (See Step S18). The malfunction indicator lamp, which serves as the alarm device 19, is illuminated to indicate that there is an abnormality in the DPF 14, which allows the driver of the vehicle to recognize that there is an abnormality in the DPF 14. After activating the alarm device 19, the ECU 15 ends the control flow.

According to the second embodiment, the ECU 15 measures the temperature of exhaust gas for multiple times and determines the variation trend in the measured electrical resistance of the lead wire 17, which permits more accurate detection of removal of the DPF 14. The determination of whether there is an abnormality in the DPF 14 is continuously performed by continuing the determination of the variation trend in the electrical resistance in the period of time t2 after the period of time t1. After the period of time t2, the determination of the variation trend in the electrical resistance continues for the periods of time t3, t4 and so on.

The exhaust gas treatment apparatus 10 according to the second embodiment offers the effect described below in addition to the above-described effects (1) to (3) of the first embodiment.
(4) According to the exhaust gas treatment apparatus 10 of the second embodiment, an abnormality in the DPF 14 is determined based on the variation trend in the e estimated electrical resistance of the lead wire 17 and the variation trend in the measured electrical resistance of the lead wire 17. In other words, an abnormality in the DPF 14 is determined based on the values obtained over a period of time. This permits determining an abnormality in the DPF 14 more accurately.

The present disclosure is not limited to the above-described embodiments, but may be modified in various manners within the scope of the present disclosure, as exemplified below.

In the above-described embodiments, the electrical resistance of the lead wire 17 is estimated from the temperature of exhaust gas measured by the exhaust gas temperature sensor 16 and the difference between the estimated electrical resistance and the measured electrical resistance is used for the determination of the presence or the absence of the DPF 14. However, the determination of the presence or the absence of the DPF 14 may be made based on the change in the temperature of exhaust gas caused by the change in the temperature of the DPF 14. For example, the controller may be configured to estimate the temperature of exhaust gas (the estimated temperature) from the measured electrical resistance of the lead wire 17 and to compare the difference between the temperature of exhaust gas measured by the exhaust gas temperature sensor (the measured temperature) and the estimated temperature of the exhaust gas which is estimated based on the measured electrical resistance of the lead wire 17. As with the above-described embodiment, the controller measures the electrical resistance of the lead wire and determines the presence or the absence of the DPF 14 (an abnormality in the DPF 14) based on the temperature of exhaust gas measured by the exhaust gas temperature sensor and the measured electrical resistance.

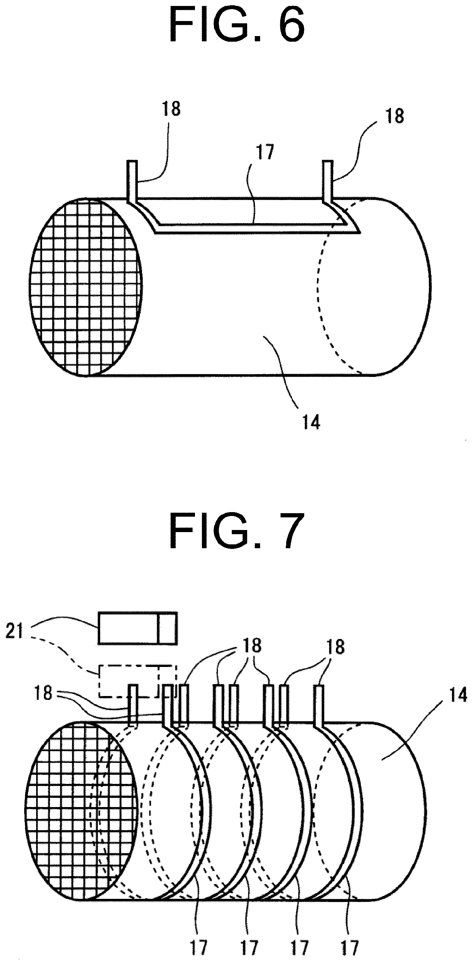

The lead wire 17 need not necessarily be disposed on the outer peripheral surface 14A of the DPF 14 extending in the circumferential direction of the DPF 14. The lead wire 17 may be disposed in any suitable manner as long as the lead wire 17 changes its temperature by the temperature of the DPF14. For example, the lead wire 17 may be disposed in a manner shown in FIG. 6 in which the lead wire 17 is disposed so that a part of the lead wire 17 extends straight along the direction that the exhaust gas passage extends. This configuration permits press-fitting of the DPF 14 to the exhaust gas pipe 12, so that the DPF 14 may be mounted to the exhaust gas passage 13 easily.

Although one lead wire 17 is disposed on the outer peripheral surface 14a of the DPF 14 in the above-described embodiments, the lead wire 17 may be provided more than one. For example, the exhaust gas treatment apparatus 10 may be provided with a plurality of lead wires 17 disposed on the outer peripheral surface 14A of the DPF 14, each extending in the circumferential direction of the DPF 14 and having a pair of terminals 18 that extends out from the lead wires 17, and a connector 21 through which the terminals are connected to the ECU 15 serving as the controller. The connector 21 is connected to at least one of the paired terminals 18. Because any one of the lead wires 17 that are disposed along the extending direction, or the axial direction, of the DPF 14 may be used, the lead wire 17 to which the connector 21 is connected is determined after the DPF 14 is press-fitted to the exhaust gas pipe 12. This permits allowance for displacement of the DPF 14 in the direction to which the DPF 14 is press-fitted, so that the lead wires 17 may be easily mounted to the DPF 14.

Although the exhaust gas treatment apparatus 10 is configured to determine the abnormality in the DPF 14 based on the variation trend in the electrical resistance and by calculating the difference between the estimated electrical resistance and the measured electrical resistance in the second embodiment, the determination may be made by using only the variation trend in the electrical resistance.

The lead wire need not necessarily be made of a material that increases its electrical resistance with an increase of the temperature. In other words, the lead wire may be made of any temperature dependent material that changes its electrical resistance with the temperature. The lead wire may be made of a semiconductor instead of a metal. Because the electrical resistance of the lead wire of semiconductor decreases with an increase of the temperature of the DPF, the controller may be modified to calculate the estimated electrical resistance in a way that is suitable for the characteristics of the semiconductor material.

The abnormality in the DPF 14 need not necessarily be indicated by illumination of the malfunction indicator lamp, but may be indicated by an alarm buzzer. The exhaust gas treatment apparatus 10 may be configured to store data of abnormality in the DPF 14 in a memory of the ECU and to indicate the abnormality on a diagnostic device that is used for the failure diagnosis.

An exhaust gas treatment apparatus (10) includes an exhaust gas passage (13), a diesel particulate filter (14) disposed in the exhaust gas passage (13) so as to purify the exhaust gas, an exhaust gas temperature sensor (16) disposed upstream of the diesel particulate filter (14) and measuring a temperature of the exhaust gas flowing into the diesel particulate filter (14), a lead wire (17) disposed on an outer peripheral surface (14a) of the diesel particulate filter (14), and a controller (15) measuring the electrical resistance of the lead wire (17) and determining whether or not there is an abnormality in the diesel particulate filter (14). The controller (15) determines whether or not there is an abnormality in the diesel particulate filter (14) based on the temperature of the exhaust gas measured by the exhaust gas temperature sensor (16) and the measured electrical resistance.

## Claims

1. An exhaust gas treatment apparatus (10) comprising:
an exhaust gas passage (13) through which an exhaust gas emitted from an internal combustion engine (11) flows;
a diesel particulate filter (14) that is disposed in the exhaust gas passage (13) so as to purify the exhaust gas;
an exhaust gas temperature sensor (16) that is disposed upstream of the diesel particulate filter(14) in the exhaust gas passage (13) and measures a temperature of the exhaust gas flowing into the diesel particulate filter (14);
a lead wire (17) that is disposed on an outer peripheral surface (14a) of the diesel particulate filter (14), wherein an electrical resistance of the lead wire (17) changes with temperature; and
a controller (15) that measures the electrical resistance of the lead wire (17) and determines whether or not there is an abnormality in the diesel particulate filter (14),
**characterized in that**
the controller (15) determines whether or not there is an abnormality in the diesel particulate filter (14) based on the temperature of the exhaust gas measured by the exhaust gas temperature sensor (16) and the measured electrical resistance.

2. The exhaust gas treatment apparatus according to claim 1, **characterized in that** the controller (15) calculates an estimated electrical resistance of the lead wire (17) based on the temperature of the exhaust gas measured by the exhaust gas temperature sensor (16), calculates a difference between the estimated electrical resistance and the measured electrical resistance, and determines that there is an abnormality in the diesel particulate filter (14) if the difference between the estimated electrical resistance and the measured electrical resistance exceeds a predetermined threshold value.

3. The exhaust gas treatment apparatus according to claim 1 or 2, **characterized in that** the exhaust gas temperature sensor (16) measures the temperature of the exhaust gas for multiple times and the controller (15) measures the electrical resistance of the lead wire (17) for multiple times, and the controller (15) estimates the electrical resistance based on the temperatures of exhaust gas, wherein the controller (15) compares a variation trend in the measured electrical resistance and a variation trend in the estimated electrical resistance, and wherein the controller (15) determines that there is an abnormality of the diesel particulate filer (14) if the variation trend in the measured electrical resistance and the variation trend in the estimated electrical resistance are inconsistent.

4. The exhaust gas treatment apparatus according to any one of claims 1 through 3, **characterized in that** the lead wire (17) is disposed on the outer peripheral surface (14a) of the diesel particulate filter (14) and extends in a circumferential direction of the diesel particulate filter (14).

5. The exhaust gas treatment apparatus according to any one of claims 1 through 4, **characterized in that** the controller (15) is connected to an alarm device (19), wherein the controller (15) activates the alarm device (19) if the controller (15) determines that there is an abnormality in the diesel particulate filter (14).
